# EUROPEAN PATENT SPECIFICATION

(11) **EP 2 545 258 B1**
(45) Date of publication and mention of the grant of the patent: **20.01.2016**
(21) Application number: 11709320.3
(22) Date of filing: 10.03.2011
(51) Int. Cl.: F01M 1/16, F16N 25/02, F16N 27/00

(54) **VALVE ARRANGEMENT FOR DOSING A FLUID**
VENTILANORDNUNG ZUR DOSIERUNG EINES FLUIDS
GROUPEMENT DE SOUPAPES POUR DOSER UN FLUIDE

(30) Priority: 12.03.2010 DK 201070099
(43) Date of publication of application: 16.01.2013
(73) Proprietor: Hans Jensen Lubricators A/S, 9560 Hadsund (DK)
(72) Inventor: Bak, Peer, DK-9300 Sæby (DK)
(74) Representative: Nielsen, Leif
(86) International application number: PCT/DK2011/050078
(87) International publication number: WO 2011/110181

(56) References cited:
- EP-A1- 2 093 394
- EP-A2- 0 368 430
- DE-C1- 3 906 683
- GB-A- 780 883

## Description

### Field of the Invention

The present invention concerns a valve arrangement for dosing a fluid via a dosing unit and including two valves with a first and a second valve element for opening and closing gates in the valves, the valve arrangement connected via its ports with a feed line and a return line connecting the valve arrangement with a pressure source for the fluid.

The invention further concerns a valve arrangement in combination with a dosing unit.

The invention further concerns a method for operating the valve arrangement for dosing a fluid via a dosing unit.

### Background of the Invention

Response time for commonly available solenoid valves provide that these are unsuited for precise delivery of small portions of fluid, both with regard to precision in timing and to dispensed volume. This is, for example, the case with dosing cylinder lubricating oil to large diesel engines, in particular when the lubricating oil is to be dosed into an engine cylinder under high pressure. An example is shown in EP 2 093 394 A1. Traditional solenoid valves have typically a response time of 50 ms or more. By lubricating oil systems for dosing cylinder lubricating oil to large diesel engines, there is typically a need for a response time of 5-10 ms. Therefore, it is common to use very expensive valves with rapid response time of the type with piezo-activation.

The present invention is developed in connection to a lubricating oil system for dosing cylinder lubricating oil to large diesel engines. However, the invention may also be applied to other types of fluid dosing, where there is a need for precise delivery of a small fluid portion for a short time period and where it is desired to use technically simple and cheap valves for controlling the dosing.

From EP 1 426 571 there is known a valve arrangement of the type mentioned in the introduction for dosing a fluid via a dosing unit. The arrangement includes two valves, of which one valve has a valve element for opening and closing ports in the valve, and of which the other valve has a valve element for partial opening/closing through-flow in order to limit the amount of oil through the other valve. The arrangement is, however, only connected with one feed line via its ports. The disclosed arrangement is not connected with a return line, enabling blocking and opening for a fluid flow which via the oil portion limiting other valve may be greater or lesser through the feed line.

### Object of the Invention

It is the object of the present invention to provide a system with a new valve arrangement for dosing a fluid which via feed and return line is delivered from a pressure source, and where it is possible to use mechanically simple valves and at the same time achieve a precise dosing of the fluid, both with regard to time and amount.

It is furthermore an object to indicate a method for use of the valve arrangement for lubricating engine cylinders in large diesel engines, preferably by lubricating at high lubricating oil pressures of 40 bar and above.

### Description of the invention

According to the present invention, this is achieved by a valve arrangement of the type mentioned in the introduction which is peculiar in that it includes a first and a second three-way valve, that the first valve has a first port connected with a first port in the second valve, a second port connected with a connecting line to the dosing unit, and a third port connected with the feed or return line, that the second valve includes a second port and a third port connected with the feed line or the return line, that the first valve element has a first position in which the second and third ports communicate, and a second position where the first and second ports communicate, and that the second valve element has a first position in which the first and third ports communicate, and a second position in which the first and second ports communicate.

The method according to the invention is peculiar by including:
- establishing an initial step for a dosing cycle where the first valve element and the second valve element are disposed in their first position;
- a step where the first valve element is displaced to its second position,
- a step where the second valve element is displaced to the second position while the first valve element is still in its second position
- a subsequent step where the first valve element and the second valve element are displaced to their first position for re-establishing the initial step for a succeeding dosing cycle.

The dosed fluid portion is controlled by controlling the two three-way valves that are interconnected such that they separately control opening time and closing time, respectively, for the dosing. Controlling the dosing of fluid includes control of opening times and holding times for the two valve elements in the valves. It is possible to provide an overlap of the activation of the two valves such that there will only be a very short and well-defined dosing time where both valves are activated, allowing delivery of fluid from the valve arrangement, and thereby dosing via the dosing unit.

The two valves are connected such that one valve opens for dosing by lowering the pressure in the return line of the dosing unit, and the other valve closes the dosing by pressurising the return line of the dosing unit again. The two valves are alternatively connected such that one valve opens for dosing by pressurising the dosing unit chamber in front of the closing member by connecting this chamber with the feed line, and the other valve closes the dosing by lowering the pressure in the dosing unit chamber in front of the closing member again by connecting this chamber with the return line again.

This provides a technically very simple possibility of exact adjustment of the dosing by even small fluid portions by using valves that have much longer response time than the time in which dosing is to be performed.

Using two valves means that the opening time of the dosing unit can be reduced to a few milliseconds, depending on the fluid portion desired to be delivered. Normal commercially available solenoid valves have much longer response time than needed for attaining small portions of dosed fluid. By using an overlap in the movement of the two valves, it becomes possible to attain very short times for delivery and thereby also possibility of precise delivery of even small fluid portions by using simple and cheap valves which have long response times.

According to a further embodiment of the invention, the valve arrangement is peculiar in that the valve arrangement further includes a control unit for controlling the valve elements. This control unit may at the same time be used for monitoring applied functions, e.g. the amount of dosed fluid.

According to a further embodiment of the invention, the valve arrangement is peculiar in that the valves are solenoid valves. In that connection is used method steps which include activation of magnets/solenoids for displacing the valve elements. Technically very simple valves may thereby be used where the movement of the valve elements is easy to control.

According to a further embodiment of the invention, the valve arrangement is peculiar in that the valves are adapted for independent displacement of the valve elements between their first and second position in a chosen sequence. It will thus be possible to vary the length of holding times for the valve elements in their positions in order to achieve shorter or longer periods of time with overlap.

According to a further embodiment of the invention, the valve arrangement is provided in combination with a dosing unit with a first chamber provided behind a closing member and containing a spring that urges the closing member against its closed position, and with a second chamber in front of the closing member, the second chamber connected with a branch line connecting the second chamber with the feed line, and which is peculiar in that the third port of the first valve is connected with the feed line, that the second port of the first valve is connected with the first chamber of the dosing unit, and that the third port of the second valve is connected with the return line. This embodiment is particularly suited for dosing fluid in a space in which a high pressure exists, and where it is very important that the fluid is dosed with high pressure from the beginning to the end of the dosing.

According to a further embodiment of the invention, the valve arrangement is provided in combination with a dosing unit with a first chamber provided behind a closing member and containing a spring that urges the closing member against its closed position, and with a second chamber in front of the closing member, and which is peculiar in that the third port of the first valve is connected with the return line, that the second port of the first valve is connected with the second chamber of the dosing unit, and that the third port of the second valve is connected with the feed line. This embodiment is particularly suited for dosing systems where the pressure in the chamber in front of the closing member is filled with fluid and where the fluid pressure at the same time lifts the closing member off its seat and doses the fluid through the opening of the opened dosing unit.

According to a further embodiment of the invention, the method is peculiar in that the pressure in the feed line is chosen sufficiently great to establish displacement of a closing member in the dosing unit against the action of a spring that retains the closing member in its closed position. This enables application of dosing units of the type where a spring keeps the closing member in its closed position, and where nothing is needed apart from the fluid pressure to activate the dosing unit.

According to a further embodiment of the invention, the method is peculiar in that the dosing includes control of opening times and holding times for the two valve elements. Hereby it becomes possible that different overlaps can be formed between the opening of the two valves and thereby also to vary the dosing.

According to a further embodiment of the invention, the method is peculiar in that a volumetric measurement of the dosed fluid portion is performed. Hereby, a safety function for the operation can be established as actual dosing of the fluid portion expected by activation of the valve may be controlled. The amount of fluid to the dosing unit may be controlled by measuring the actual consumption, and by a control loop the opening time for the valve arrangement may be adjusted for achieving the desired amount of fluid.

In a further embodiment, a monitoring of the position of the valve elements is provided such that it may be ensured that they correctly change position between the first and second positions. For example, one or two induction encoders may be incorporated per valve. These encoders detect when the valve slides are at the relevant extreme positions and transmit a signal to the control unit. Such an alternative solution may optionally be combined with performing a flow measurement of the dosed fluid portion. Hereby it becomes possible to control and ensure a correct dosing.

The pipe system for the fluid will preferably include the feed line for feeding lubricating oil under pressure and the return line for returning excess fluid to a pump or accumulator. These will be mounted along the longitudinal axis for various dosing points where valve arrangements according to the invention are used. A pressure valve is mounted at the opposite end in relation to the pump such that the fluid is circulated all the time in the pipe system. The pump energy is hereby transformed to heating of the fluid in the pipeline, and it is possible to ensure a uniform temperature. This prevents local overheating of the fluid, and it is possible to eliminate need for cooling the fluid.

### Description of the Drawing

The invention will now be described in more detail with reference to the accompanying drawing, in which
- Fig. 1: is a schematic diagram of a dosing system with a valve arrangement according to a first embodiment of the invention;
- Fig. 2: is a schematic diagram of a dosing system with a valve arrangement according to a second embodiment of the invention;
- Fig. 3: shows a schematic diagram of the structure of a first embodiment of a valve arrangement with two three-way valves and illustrated with three different operating positions A, B and C for the valve arrangement in closed and open condition;
- Fig. 4: shows a schematic diagram of the structure of a second embodiment of a valve arrangement with two three-way valves and illustrated with three different operating positions A, B and C for the valve arrangement in closed and open condition; and
- Fig. 5: shows a diagram for illustrating a dosing cycle with time where the valve arrangement shown in Figs. 3 and 4 is used.

### Detailed Description of the Invention

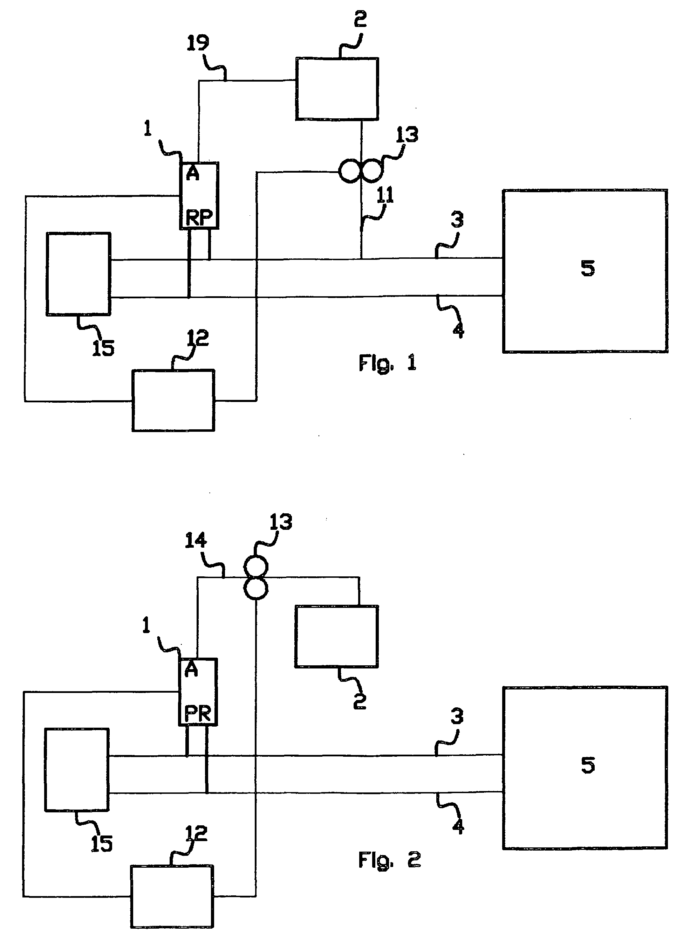

Fig. 1 shows a diagram of a dosing system with a valve arrangement 1 according to the invention. The dosing system includes a dosing unit 2 which is connected with the valve arrangement 1 via a connecting line 19. A supply line 3 and a return line 4 connect a pressure source, which may be a pump or an accumulator for fluid, with the valve arrangement 1.

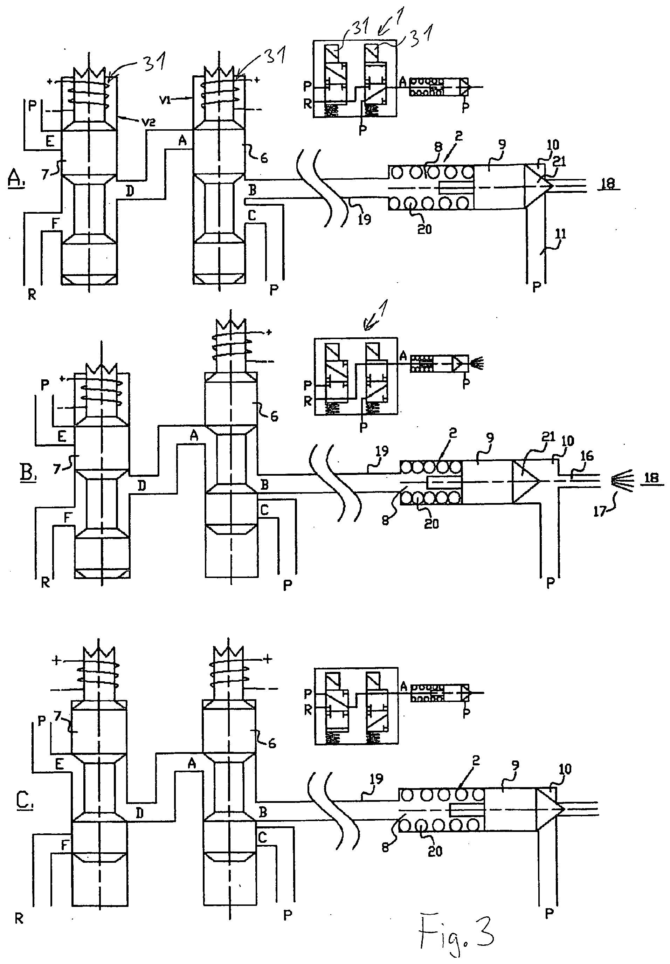

The dosing system furthermore includes a control unit 12 which is connected with the valve arrangement 1 and a volume meter 13 which is disposed in a branch line 11 connecting the feed line 3 with a second chamber 10, as described in more detail with reference to Fig. 3.

The feed line 3 and the return line 4 are shown as long parallel lines, and at their ends farthest from the pressure source 5, there is provided a pressure valve or pressure switch 15. Excess fluid will thus be circulated from the pressurised feed line 3 via the pressure valve 15 back through the return line 4 to the pressure source 5.

There is only shown one valve arrangement 1 connected to the feed line 3 and the return line 4. However, a number of parallel valve arrangements 1 may be connected.

The valve arrangement 1 has a port A for connection with the dosing unit 2 via the connecting line 19 and a connection P to the feed line 3 and a connection R to the return line 4.

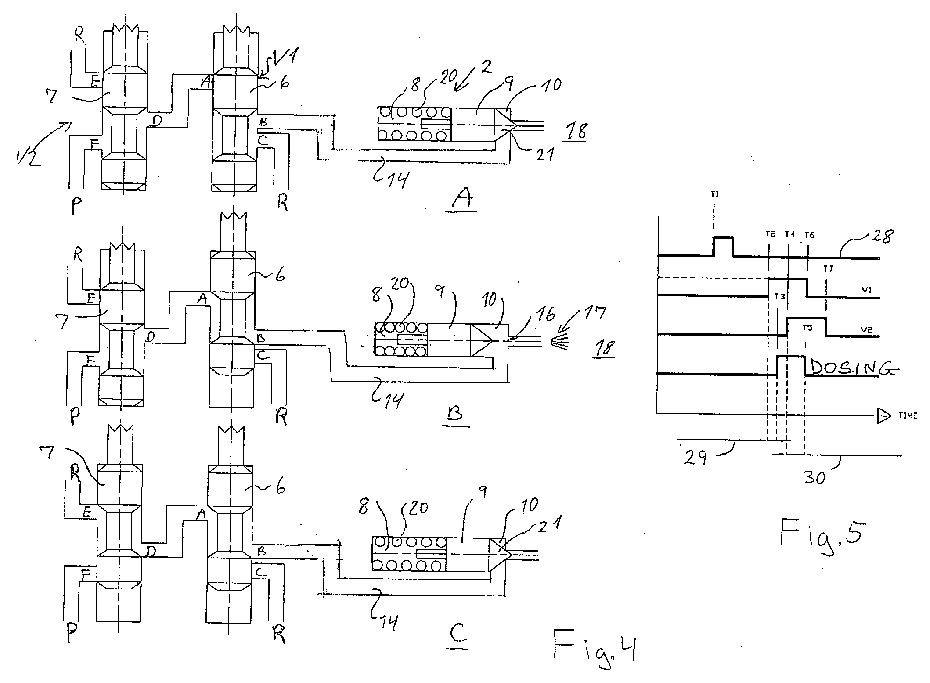

Fig. 2 shows a diagram corresponding to Fig. 1. Same or corresponding elements are therefore provided with the same designations. The dosing system shown on Fig. 2 is different in that the volume meter 13 is disposed in a connecting line 14 connecting port A of the valve arrangement 1 with the second chamber 10, such as described in more detail with reference to Fig. 4.

Fig. 3 shows the valve arrangement according to the invention in a first embodiment. The valve arrangement 1 consists of two three-way valves V1 and V2. In the shown embodiment, they are solenoid valves. The valves are connected in a dosing system as shown in Fig. 1.

For illustrative purposes, only one dosing unit 2 associated with the valve arrangement 1 is shown in Fig. 3. However, more dosing units 2 can be associated with a valve arrangement 1.

The first valve V1 of the valve arrangement has a first valve element 6, and the second valve V2 has a second valve element 7. The valve elements serve to open and close the ports A-F in the two three-way valves.

The first valve V1 has a first port A connected with a first port D in the second valve V2, and a second port B connected with a connecting line 19 to the dosing unit 2. The first valve V1 has a third port 3 which is connected with the feed line 3 via the connection P of the valve unit.

The second valve V2 includes a second port E which is connected with the feed line 3 via the connection P and a third port F connected with the return line 4 via the connection R.

Each of the two valves V1 and V2 has a first and a second position as shown in Figs. 3A-3C. The first position of the two valve elements 6, 7 is shown in Fig. 3A, and the second position of the two valve elements 6, 7 is shown in Fig. 3C.

In the first valve V1, a first position of the first valve element 6 will mean that the second and third ports B and C communicate with each other, and in the second position of the valve element 6, the first and second ports A and B will communicate with each other.

In the second valve V2, a first position of the second valve element 7 will mean that the first and third ports D and F communicate with each other, and in the second position of the valve element 7, the first and second ports D and E will communicate with each other.

In Fig. 3 appears that the dosing unit 2 is provided with a closing member 9 having a pointed end 21 which is urged towards its closed position by a spring 20, where the pointed end 21 closes a dosing aperture 16 through which a dosed fluid portion 17 (see Fig. 3b) is dosed into a compartment 18. At a rear end of the closing member 9, there is formed a first chamber 8 where the spring 20 is disposed. In front of the closing member 9 and around the pointed end 21 there is formed a second chamber 10 which is supplied with pressurised fluid from the branch line 11 connected with the feed line 3.

When the dosing unit is closed, it appears that the first chamber 8 of the dosing unit under full feed pressure via the port A and the connecting line 19. The valve V1 thus opens for a dosage by lowering the pressure in the connecting ling 19 when the first valve element 6 is displaced from its first to its second position, as shown in Fig. 3B. The dosing is stopped when the second valve element 7 is displaced from its first position shown in Fig. 3B to its second position shown in Fig. 3C, as once again a pressurisation is effected in the first chamber 8 so that the closing member is pressed against its closed position by the spring 20.

Fig. 3B shows V1 activated, and the pressure in the first chamber 8 of the dosing unit may escape through V1 and V2 through the port F to the connection R and to the return line 4 which has a lower pressure than the pressure in the feed line 3 acting through the connection P. The feed pressure in the fluid from the branch line overcomes the spring force and presses the closing member 9 back such that a fluid portion 17 is dosed through the opening 16 into the space 18.

Fig. 3C shows that both V1 and V2 are activated. Hereby, V2 opens the connection P which is connected with the feed line 3, and the fluid is pressed through V1 to the first chamber 8 and acts on the back side of the closing member 9. Hereby, the pressure on both sides of the closing member 9 will be equally large such that the spring force presses the closing member to its closed position such as shown in Fig. 3C.

Then V1 is deactivated and moved to its first position such that the pressure on the back side of the closing member is maintained, before V2 is deactivated again and moved to its first position, as shown in Fig. 3A. A new dosing cycle may then be commenced again. By applying an overlap in the displacement of the two valve elements 6, 7, it is possible that the dosing unit 2 only doses a few milliseconds, depending on the overlap and the desired fluid portion to be delivered by the dosing unit.

In Figs. 3A - 3C is shown that each of the two valve elements 6, 7 are connected with a solenoid 31 for actuating the valves V1 and V2. Moreover, a small image with a pictogram is inserted, showing the structure of the valve arrangement 1 and showing that each of the two valves V1 and V2 also include a spring 32 pressing the two valve elements 6, 7 towards their first positions shown in Fig. 3A. By activating the solenoid 31, the associated valve element 6, 7 is pushed towards the second position shown in Fig. 3C.

Fig. 4 shows a design corresponding to the one shown in Fig. 3 with the exception of the way in which the valve arrangement is connected to the feed and return lines 3,4. It is noted that in Fig. 4, the solenoids 31 for the valves as well as the pictograms for the valve arrangements are not shown. In this embodiment, no branch line is provided between the feed line 3 and the second chamber 10 of the dosing unit. However, between the first valve V1 and the dosing unit 2, a connecting line 14 is provided which establishes a connection to the second chamber 10 of the dosing unit.

In the embodiment shown in Fig. 4, in the initial position shown in Fig. 4A there will thus not be provided a high pressure at each side of the closing member 9.

The closing member is thus retained by the spring force against its closed position. The pressure from the return line 4 is communicated to the second chamber 10 via the ports B and C of the first valve. However, this pressure will be insufficient to overcome the spring force. In the initial position shown in Fig. 4A, there will thus be provided a pressure in the second chamber 10 corresponding to the pressure in the return line.

For activating a dosing, the first valve element 6 is moved to its second position, whereby the port B is brought to communicate with the port A and thereby the pressure of the feed line via port F of the valve V2. The feed line pressure is thereby transmitted through the connecting line 14 to the second chamber 10 such that the closing member 9 is displaced against the action of the spring force. The pointed end 21 is hereby lifted off the opening 16 and initiates dosing a fluid portion 17 into the space 18 via the opening 16.

For ending the dosing, the second valve element 7 is displaced from its first to its second position shown in Fig. 4C such that the second chamber via the port B and the two valves V1 and V2 and the port E in the valve V2 are connected with the return line 4. Hereby, the low pressure will prevail in the second chamber 10 again, and the spring force will displace the closing member 9 to its closed position, as shown in Fig. 4C.

In order prepare the valve unit again, V1 is deactivated before deactivating V2, and a new cycle may then be commenced again.

Fig. 5 shows the course of an injection cycle over time. The control unit 12 is provided a start signal 28 at the time T1 and emits an activation signal at the time T2 to the valve V1. The valve V1 starts dosing fluid at the time T3 with a delay 29 which is indicated by T3-T2. Also, the control unit 12 transmits an activation signal T4 to the valve V2 for stopping dosage of fluid. The valve V2 is activated and closes dosage of fluid at the time T5 with a delay 30 which is indicated by the time interval T5-T4. Deactivation of the valves V1 and V2 occurs at the times T6 and T7. Dosing is thus effected in the time interval T5-T3.

An overlapping of these opening-closing functions may be established by correlating times for activation, and thereby very small portions may be dosed with valves having long response times.

## Claims

1. A valve arrangement (1) for dosing a fluid via a dosing unit (2) and including two valves (V1, V2) with a first and a second valve element (6, 7) for opening and closing gates (A-F) in the valves, the valve arrangement (1) connected via its ports (C, E, F) with a feed line (3) and a return line (4) connecting the valve arrangement (1) with a pressure source (5) for the fluid,
**characterised in that**
- the valves include a first and a second three-way valve (V1, V2);
- the first valve (V1) has a first port (A) connected with a first port (D) in the second valve (V2), a second port (B) connected with a connecting line (8) to the dosing unit (2), and a third port (C) connected with the feed or return line (3, 4);
- the second valve (V2) includes a second port (E) and a third port (F) connected with the feed line (3) or the return line (4);
- the first valve element (6) has a first position in which the second and third ports (B, C) communicate, and a second position where the first and second ports (A, B) communicate; and
- the second valve element (7) has a first position in which the first and third ports (D, F) communicate, and a second position where the first and second ports (D, E) communicate.

2. Valve arrangement according to claim 1, **characterised in that** the valve arrangement includes a control unit for controlling the valve elements.

3. Valve arrangement according to claim 1 or 2, **characterised in that** the valves (V1, V2) are solenoid valves.

4. Valve arrangement according to any of claims 1 - 3 **characterised in that** a dosing unit (2) with a first chamber (8) is provided behind a closing member (9) and contains a spring that urges the closing member against its closed position, and with a second chamber (10) in front of the closing member (9), the second chamber (10) connected with a branch line (11) connecting the second chamber (10) with the feed line (3), the third port (C) of the first valve (V1) is connected with the feed line (3), the second port (B) of the first valve (V1) is connected with the first chamber (8) of the dosing unit, and the third port (F) of the second valve (V2) is connected with the return line (4).

5. Valve arrangement according to any of claims 1 - 3 **characterised in that** a dosing unit (2) with a first chamber (8) is provided behind a closing member (9) and contains a spring that urges the closing member against its closed position, and with a second chamber (10) in front of the closing member (9), the third port (C) of the first valve (V1) is connected with the return line (4), the second port (B) of the first valve (V1) is connected with the second chamber (10) of the dosing unit, and the third port (F) of the second valve (V2) is connected with the feed line (4).

6. Valve arrangement according to any preceding claim, **characterised in that** the valves (V1, V2) are adapted for independent displacement of the valve elements (6, 7) between their first and second position in a chosen sequence.

7. Valve arrangement according to any preceding claim, **characterised in that** a monitoring is provided on the valves (V1, V2), preferably in the form of an inductive encoder, for the position of the valve element such that change of position between the first and the second positions can be monitored and ensured.

8. A method for operating a valve arrangement (1) for dosing a fluid via a dosing unit (2) according to any preceding claim, **characterised by** including:
- establishing an initial step for a dosing cycle where the first valve element (6) and the second valve element (7) are disposed in their first position;
- a step where the first valve element (6) is displaced to its second position;
- a step where the second valve element (7) is displaced to the second position while the first valve element (6) is still in its second position;
- a subsequent step where the first valve element (6) and the second valve element (7) are displaced to their first position for re-establishing the initial step for a succeeding dosing cycle.

9. Method according to claim 8, **characterised by** including activation of solenoids for displacing the valve elements (6, 7).

10. Method according to claim 8 or 9, **characterised in that** the pressure in the feed line is chosen sufficiently great to establish displacement of a closing member (9) in the dosing unit (2) against the action of a spring that retains the closing member in its closed position.

11. Method according to any of claims 8 -10, **characterised in that** the dosing includes control of opening times and holding times for the two valve elements (6, 7).

12. Method according to any of claims 8 -11, **characterised in that** a volumetric measurement of the dosed fluid portion is performed.

13. Method according to any of claims 8 - 12, **characterised in that** a monitoring of the position of the valve elements is performed such that it may be ensured that they correctly change position between the first and second positions.

## Patentansprüche

1. Ventilanordnung (1) zur Dosierung eines Fluids durch eine Dosiereinheit (2) und umfassend zwei, ein erstes und ein zweites Ventilelement (6, 7) aufweisende Ventile (V1, V2) zum Öffnen und Schließen von Öffnungen (A-F) in den Ventilen, wobei die Ventilanordnung (1) durch ihre Öffnungen (C, E, F) mit einer Zuleitung (3) und einer Rückflussleitung (4) verbunden ist, die die Ventilanordnung (1) mit einer Druckquelle (5) des Fluids verbinden, **dadurch gekennzeichnet, dass**
- die Ventile ein erstes und ein zweites Dreiwegeventil (V1, V2) umfassen,
- das erste Ventil (V1) eine erste, mit einer ersten Öffnung (D) in dem zweiten Ventil (V2) verbundene Öffnung (A), eine zweite, mit einer Verbindungsleitung (8) zur Dosiereinheit (2) verbundene Öffnung (B), und eine dritte, mit der Zuleitung oder der Rückflussleitung (3, 4) verbundene Öffnung (C) aufweist;
- das zweite Ventil (V2) eine zweite (E) und eine dritte (F), mit der Zuleitung (3) oder der Rückflussleitung (4) verbundene Öffnung aufweist;
- das erste Ventilelement (6) eine erste Position aufweist, in der die zweite und die dritte Öffnung (B, C) in Verbindung stehen, sowie eine zweite Position, in der die erste und die zweite Öffnung (A, B) in Verbindung stehen; und
- das zweite Ventilelement (7) eine erste Position aufweist, in der die erste und die dritte Öffnung (D, F) in Verbindung stehen, und eine zweite Position, in der die erste und die zweite Öffnung (D, E) in Verbindung stehen.

2. Ventilanordnung nach Anspruch 1, **dadurch gekennzeichnet, dass** die Ventilanordnung eine zum Regeln der Ventilelemente vorgesehene Regeleinheit umfasst.

3. Ventilanordnung nach Anspruch 1 oder 2, **dadurch gekennzeichnet, dass** die Ventile (V1, V2) Magnetventile sind.

4. Ventilanordnung nach irgendeinem der Ansprüche 1-3, **dadurch gekennzeichnet, dass** eine Dosiereinheit (2) mit einer ersten Kammer (8) hinter einer Schließvorrichtung (9) angeordnet ist und eine Feder aufweist, die die Schließvorrichtung gegen ihrer verschlossenen Position treibt, und mit einer zweiten Kammer (10) vor der Schließvorrichtung (9), wobei die zweite Kammer (10) mit einer Zweigleitung (11) verbunden ist, die die zweite Kammer (10) mit der Zuleitung (3) verbindet, wobei die dritte Öffnung (C) des ersten Ventils (V1) mit der Zuleitung (3) verbunden ist, die zweite Öffnung (B) des ersten Ventils (V1) mit der ersten Kammer (8) der Dosiereinheit verbunden ist, und die dritte Öffnung (F) des zweiten Ventils (V2) mit der Rückflussleitung (4) verbunden ist.

5. Ventilanordnung nach irgendeinem der Ansprüche 1-3, **dadurch gekennzeichnet, dass** eine Dosiereinheit (2) mit einer ersten Kammer (8) hinter einer Schließvorrichtung (9) angeordnet ist und eine Feder aufweist, die die Schließvorrichtung gegen ihre geschlossene Position treibt, und mit einer zweiten Kammer (10) vor der Schließvorrichtung (9), wobei die dritte Öffnung (C) des ersten Ventils (V1) mit der Rückflussleitung (4) verbunden ist, die zweite Öffnung (B) des ersten Ventils (V1) mit der zweiten Kammer (10) der Dosiereinheit verbunden ist, und dass die dritte Öffnung (F) des zweiten Ventils (V2) mit der Zuleitung (4) verbunden ist.

6. Ventilanordnung nach irgendeinem der vorhergehenden Ansprüche, **dadurch gekennzeichnet, dass** die Ventile (V1, V2) zur unabhängigen Verschiebung der Ventilelemente (6, 7) zwischen ihrer ersten und zweiten Position in einer ausgewählten Sequenz eingerichtet sind.

7. Ventilanordnung nach irgendeinem der vorhergehenden Ansprüche, **dadurch gekennzeichnet, dass** an den Ventilen (V1, V2) eine Überwachung angeordnet ist, vorzugsweise in der Form eines induktiven Encoders, zur Positionierung des Ventilelements, so dass Positionswechsel zwischen der ersten und der zweiten Position überwacht und gesichert werden kann.

8. Verfahren zum Treiben einer Ventilanordnung (1) zur Dosierung eines Fluids durch eine Dosiereinheit (2) nach irgendeinem der vorhergehenden Ansprüche, **dadurch gekennzeichnet, dass** es folgendes umfasst:
- das Einleiten von einem ersten Schritt eines Dosierzyklusses, wobei das erste Ventilelement (6) und das zweite Ventilelement (7) in ihre erste Position angeordnet werden;
- einen Schritt, wobei das erste Ventilelement (6) in seine zweite Position verschoben wird;
- einen Schritt, wobei das zweite Ventilelement (7) in seine zweite Position verschoben wird, während sich das erste Ventilelement (6) noch in seiner zweiten Position befindet;
- einen nachfolgenden Schritt, wobei das erste Ventilelement (6) und das zweite Ventilelement (7) in ihre erste Position zum Wiederherstellen des einleitenden Schrittes eines nachträglichen Dosierzyklusses verschoben werden.

9. Verfahren nach Anspruch 8, **dadurch gekennzeichnet, dass** es die Betätigung von Magneten zur Verschiebung der Ventilelemente (6, 7) umfasst.

10. Verfahren nach Anspruch 8 oder 9, **dadurch gekennzeichnet, dass** die Größe des Zuleitungsdruckes für die Verschiebung eines Verschlußglieds (9) in der Dosiereinheit (2) gegen die Wirkung einer Feder, die das Verschlußglied in seiner geschlossenen Position festhielt, ausreichend gewählt ist.

11. Verfahren nach irgendeinem der Ansprüche 8-10, **dadurch gekennzeichnet, dass** die Dosierung auch Regeln von Öffnungszeiten und Haltezeiten der zwei Ventilelemente (6, 7) umfasst.

12. Verfahren nach irgendeinem der Ansprüche 8-11, **dadurch gekennzeichnet, dass** die dosierte Fluidmenge volumetrisch gemessen wird.

13. Verfahren nach irgendeinem der Ansprüche 8-12, **dadurch gekennzeichnet, dass** die Position der Ventilelemente überwacht wird, so dass der korrekte Positionswechsel zwischen der ersten und der zweiten Position gesichert wird.

## Revendications

1. Groupement de soupapes (1) pour doser un fluide par une unité de dosage (2) et comprenant deux soupapes (V1, V2) avec un premier et un second élément de soupape (6, 7) pour ouvrir et fermer des portes (A-F) dans les soupapes, le groupement de soupapes (1) est connecté, par ses portes (C, E, F), à une conduite d'alimentation (3) et une conduite de retour (4) connectant le groupement de soupapes (1) avec une source de pression (5) pour le fluide,
**caractérisé en ce que**
- les soupapes comprennent une première et une seconde soupape à trois voies (V1, V2) ;
- la première soupape (V1) comprend une première porte (A) connectée à une première porte (D) dans la seconde soupape (V2), une deuxième porte (B) connectée à une conduite de liaison (8) pour l'unité de dosage (2), et une troisième porte (C) connectée à la conduite d'alimentation ou de retour (3,4) ;
- la seconde soupape (V2) comprend une deuxième porte (E) et une troisième porte (F) connectées à la conduite d'alimentation (3) ou la conduite de retour (4) ;
- le premier element de soupape (6) comprend une première position dans laquelle les deuxième et troisième portes (B, C) sont en communication ; et
- le deuxième élément de soupape (7) comprend une première position dans laquelle la première et la deuxième portes sont en communication, et une deuxième position dans laquelle la première et la deuxième porte (D, E) sont en communication.

2. Groupement de soupapes selon la revendication 1, **caractérisé en ce que** le groupement de soupapes comprend une unité de contrôle pour contrôler les éléments de soupape.

3. Groupement de soupapes selon la revendication 1 ou 2, **caractérisé en ce que** les soupapes (V1,V2) sont des soupapes solénoïdes.

4. Groupement de soupapes selon l'une quelconque des revendications 1 à 3, **caractérisé en ce qu**'une unité de dosage (2) avec une première chambre (8) est prévue derrière un élément de fermeture (9) et comprend un ressort engageant l'élément de fermeture vers sa position fermée, et avec une deuxième chambre (10) prévue devant l'élément de fermeture (9), la deuxième chambre (10) est connectée à une conduite de raccordement (11) connectant la deuxième chambre (10) à la conduite d'alimentation (3), la troisième porte (C) de la première soupape (V1) est connectée à la première chambre (8) de l'unité de dosage, et la trosième porte (F) de la deuxième soupape (V2) est connectée à la conduite de retour (4).

5. Groupement de soupapes selon l'une quelconque des revendications 1 à 3, **caractérisé en ce qu**'une unité de dosage (2) avec une première chambre (8) est prévue derrière un élément de fermeture (9) et comprend un ressort engageant l'élément de fermeture vers sa position fermée, et avec une deuxième chambre (10) devant l'élément de fermeture (9), la troisième porte (C) de la première soupape (V1) est connectée à la conduite de retour (4), le deuxième orifice (B) de la première soupape (V1) est connecté à la deuxième chambre (10) de l'unité de dosage, et la troisième porte (F) de la deuxième soupape (V2) est connectée à la conduite d'alimentation (4).

6. Groupement de soupapes selon l'une quelconque des revendications précédentes, **caractérisé en ce que** les soupapes (V1, V2) sont adaptées pour un déplacement indépendant des éléments de soupape (6, 7) entre leur première et deuxième position dans une séquence choisie.

7. Groupement de soupapes selon l'une quelconque des revendications précédentes, **caractérisé en ce qu**'un contrôle des soupapes (V1, V2) est prévu, de préférence en forme d'un codeur inductif, pour la position de l'élément de soupape afin de pouvoir contrôler et assurer un changement de position entre les premières et les deuxièmes positions.

8. Procédé pour actionner un groupement de soupapes (1) pour doser un fluide par une unité de dosage (2) selon l'une quelconque des revendications précédentes, **caractérisé en ce qu'**il comprend :
- établissement d'une première étape d'un cycle de dosage où le premier élément de soupape (6) et le second élément de soupape (7) sont disposés dans leur première position ;
- une étape où le premier élément de soupape (6) est déplacé à sa deuxième position ;
- une étape où le second élément de soupape (7) est déplacé à la deuxième position pendant que le premier élément de soupape (6) reste toujours dans sa deuxième position ;
- une étape suivante où le premier élément de soupape (6) et le second élément de soupape (7) sont déplacés à leur première position pour un rétablissement de l'étape initiale pour un cycle de dosage suivant.

9. Procédé selon la revendication 8, **caractérisé en ce qu'**il comprend une activation des solénoïdes pour déplacer les éléments de soupape (6, 7).

10. Procédé selon la revendication 8 ou 9, **caractérisé en ce que** la pression dans la conduite d'alimentation est choisie suffisamment élevée pour établir un déplacement d'un élément de fermeture (9) dans l'unité de dosage (2) contre l'action d'un ressort qui retient l'élément de fermeture dans sa position fermée.

11. Procédé selon l'une quelconque des revendications 8 à 10, **caractérisé en ce que** le dosage comprend un contrôle des temps d'ouverture et de fermeture pour les deux éléments de soupape (6, 7).

12. Procédé selon l'une quelconque des revendications 8 à 11, **caractérisé en ce qu**'un mesurage volumétrique de la partie de fluide dosée est effectué.

13. Procédé selon l'une quelconque des revendications 8 à 12, **caractérisé en ce qu'**il est effectué un contrôle de la position des éléments de soupape, de façon à pouvoir s'assurer qu'ils changent de position correctement entre les premières et les deuxièmes positions.
